# EUROPEAN PATENT APPLICATION

(11) **EP 0 960 914 A1**
(43) Date of publication of application: **01.12.1999**
(21) Application number: 99108800.6
(22) Date of filing: 03.05.1999
(51) Int. Cl.: C09C 3/04, C09B 67/00, B01J 19/08

(54) **Manufacturing of ultra fine particles**

(30) Priority: 28.05.1998 JP 14800698
(71) Applicant: Stanley Electric Co., Ltd., Meguro-ku Tokyo (JP)
(72) Inventor: Seko, Toshihiro, c/o Stanley Electric CO.,LTD., Yokohama-shi, Kanagawa-ken (JP); Sugino Hiroaki, c/o Stanley Electric CO.,LTD., Yokohama-shi, Kanagawa-ken (JP); Ogura, Kazuhito, c/o Stanley Electric CO.,LTD., Yokohama-shi, Kanagawa-ken (JP)
(74) Representative: Geyer, Ulrich F., Dr. Dipl.-Phys.

(57) **Abstract**

A method of manufacturing ultra fine particles comprises the steps of: generating plasma of a gas containing reactive gas; forming ultra fine particles by evaporating and passing raw material through the gas; changing surface characteristics of ultra fine particles by passing them through said plasma of a gas containing reactive gas; and catching the ultra fine particles on a moving carrier and continuously retrieving the ultra fine particles. Thereby the ultra fine particles having changed characteristics can be prepared efficiently.

## Description

This application is based on Japanese Patent Application HEI 10-148006, filed on May 28, 1998, the entire contents of which are incorporated herein by reference.

### BACKGROUND OF THE INVENTION

### a) Field of the Invention

This invention relates to ultra fine particles and in particular to a method and a device of manufacturing ultra fine particles, which change the characteristics of raw material.

### b) Description of the Related Art

Plasma is highly ionized gas that includes positive ions, negative ions (including electrons), and radicals. Plasma has chemically and physically active characteristics and is used in many kinds of process.

There are high-temperature plasma in which thermostatistical equilibrium exists between electron temperature and gas temperature, and low-temperature plasma in which thermostatistical equilibrium does not exist between electron temperature and gas temperature. In the low-temperature plasma, electron temperature of electrons accelerated by an electric field is higher than gas temperature in which neutral gas molecules (or atoms) perform a dominant role.

For a plasma discharge, there are a direct current discharge and an alternating current discharge. The direct current discharge includes glow discharge, corona discharge, arc discharge, and the like. The alternating discharge includes high frequency discharge, microwave discharge, and the like. The glow discharge, the corona discharge, the high frequency discharge, and the microwave discharge generate the low-temperature plasma, but the arc discharge generates the high-temperature plasma.

Plasma is used in surface treatment such as manufacturing high-polymer material and changing in surface characteristics of them, and also etching of electronics material or the like. It is known that either or both of chemical and physical activity of plasma is or are used to perform the treatments.

Moreover, surface treatment technique of powder by plasma has been reported by Arakawa et al., "The Newest Material Designing of Powder," page 235 to 256, Technosystem (1988).

Carbon black and higher organic pigment are powders. They are known to be hardly dispersed in active solvent such as water. The reason of this phenomenon is considered that these pigments have small surface polarity and poor affinity with resin and solvent. Therefore, by polarizing the surfaces, affinity with solvent containing polar radical such as water or the like may be increased. It is considered that the surface characteristics of the pigments can be changed thereby. Plasma treatment has been proposed to be one of the characteristics changing treatment. By using the low-temperature plasma, change in surface characteristics will be possible without giving a thermal action of plasma to reactive substance.

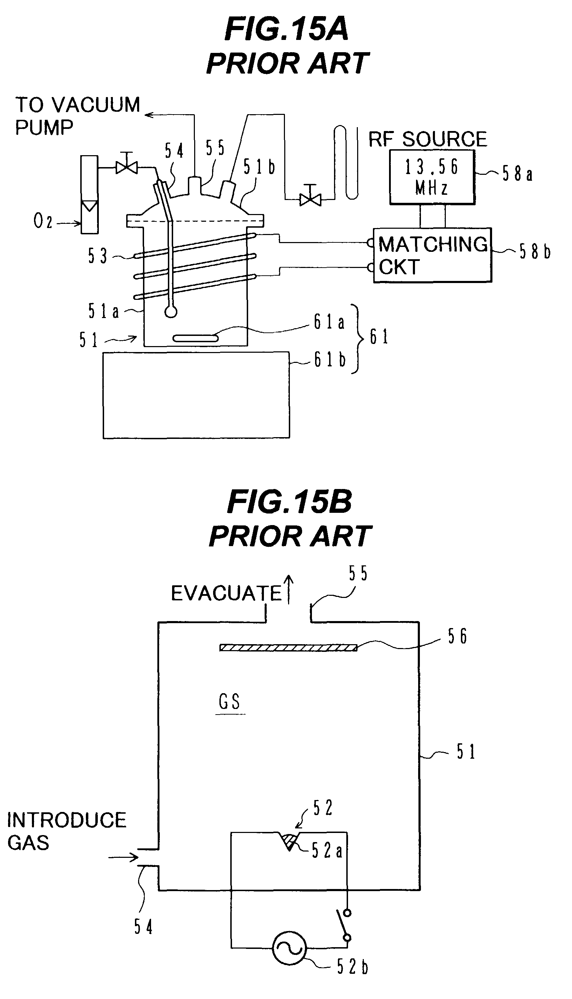

Fig.15A shows an example of plasma treatment apparatus for powder according to prior art. A vacuum vessel 51 contains a combination of a flask 51a, for example, made of Pyrex (trade mark, Corning Glass) and a cover 51b having means for supplying and evacuating gas. A coil 53, as a radio-frequency electrode, is wound around the flask 51a of the vacuum vessel 51. The coil 53 is connected to a 13.56MHz radio-frequency power source 58a via a matching circuit 58b. The vacuum vessel 51 is placed on a planetary magnetic field power source 61b and is equipped with a stirrer 61a including a permanent magnet at the bottom. That is, the stirrer 61a and the planetary magnetic field power source 61b constitute a magnetic stirrer 61.

The cover 51b of the vacuum vessel is equipped with a gas supply port 54 and a gas exhaust port 55. The gas supply port 54 is connected to a gas source, such as an O₂ gas source or the like. The exhaust port 55 is connected to an evacuation system, such as a vacuum pump or the like.

Powder such as pigment, which is a target of the treatment, is supplied in the flask 51a of the vacuum vessel 51 with the stirrer 61a at the bottom. After the cover 51a is attached hermetically onto the flask 51a, the vacuum vessel 51 is evacuated to form a vacuum via the exhaust port 55. While the evacuation of the vacuum pump via the exhaust port 55 is being continued, work gas is introduced from the gas source into the vacuum vessel.

By controlling supply and exhaust of the gas, inside of the vacuum vessel 51 is kept in a predetermined reduced pressure state. In this state, by supplying radio-frequency electricity to the coil 53, which is a plasma-exciting electrode, from the radio-frequency power source 58a, plasma is generated in the vacuum vessel 51. In this way, the powder in the vacuum vessel is treated with plasma.

The powder such as pigment is mixed to perform a uniform treatment to the whole surfaces of all the particles of the powder by rotating the stirrer 61a which is placed on the bottom of the flask 51a by the planetary magnetic field generated from the planetary magnetic field power source 61b. The dispersivity of powder pigment, for example, can be increased with this kind of plasma treatment.

In the mean time, as a kind of powder, ultra fine particles are known. Ultra fine particles are characterized by its very small diameter and by having distinct by different characteristics from those of the same material in bulk state. The surface area of a particle is in proportion to the square of its diameter, and the volume of a particle is in proportion to the cube of its diameter. Thereby, particles having a small diameter mean that the surface areas are relatively large compared to their volumes.

Ultra fine particles may be considered as a material having different characteristics from the material in bulk state because the ultra fine particles have very small diameters and influences of the surfaces thereof become larger compared to a bulk material which has less influence of the surface. Ultra fine particles typically have diameters of 100nm or less, for example, having diameters of 50nm or less. In this specification and claims, those particles having diameters of several micrometers or less will be referred to as ultra fine particles. The lower limit of the diameters of the particles in practice is about 0.01µm.

Surfaces of solid-particles inevitably contain dangling bonds unlike the insides. Thereby, the surfaces of the solids have different characteristics from the inside of the solids. It is considered because the influences of the surfaces are very large, ultra fine particles have different characteristics from particles of large diameters. Moreover, it is considered that the small diameters cause remarkable quantum effect. Generally speaking, ultra fine particles have chemically active characteristics compared to those of particles of large diameters.

Fig.15B shows an example of the system for forming ultra fine particles. A vacuum vessel 51 has a gas supply port 54 and a gas exhaust port 55 and can keep the inside at a predetermined pressure. This vacuum vessel 51 defines an ultra-fine-particles generating space GS. An evaporation source 52 and a substrate 56 are disposed inside the vacuum vessel 51.

The evaporation source 52 evaporates accommodates raw material, for example, in a crucible or the like, and generates vapor thereof. The evaporation source 52 includes an evaporator 52a and a power source 52b such as an electric power source or the like that is the means for supplying an energy for evaporating raw material. The substrate 56 is means for retrieving the produced ultra fine particles and, for example, is equipped with a cooling device that circulates coolant such as water or the like. The gas supply port 54 is connected to an inert gas source, and the gas exhaust port 55 is connected to an evacuating system.

After evacuating the inside of the vacuum vessel 51, inert gas, such as nitrogen or helium, is supplied via the gas supply port 54. The raw material is evaporated from the evaporation source 52 while the inside of the vacuum vessel 51 is being evacuated to a predetermined pressure of several Torr or lower via the exhaust port 55. The raw material (molecules, clusters, or atoms) evaporated from the evaporator 52a such as a crucible or the like increase the diameter gradually by repeated collisions inside the ultra-fine-particles generating space GS until reaching and being caught by the substrate 56.

The inert gas supplied into the ultra-fine-particles generating space GS is selected item chemically inert gas because the gas is supplied to promote collisions of the vapor particles evaporated from the evaporator 52a. Ultra fine particles are prepared by retrieving the ultra fine particles caught on the substrate 56.

When pigment such as carbon black, a higher organic pigment or the like is prepared by the ultra-fine-particles forming device shown in Fig.15B, an ultra-fine-particles material coming out is not highly dispersive in solvent. In order to improve the dispersivity of the pigment, it can be considered to perform the plasma treatment shown in Fig.15A.

It was proved that the sufficient affect of the plasma treatment could not be obtained by performing the conventional plasma treatment for powders. Plasma is effective for changing surface characteristics when the surface is facing to plasma, but it is less effective when it is hidden.

Ultra fine particles have tendency to aggregate because of their characteristics of being chemically very active, and once they aggregate, they will not be well separated even by stirring with a stirrer or the like. Aggregated powder can present only their outer surface to plasma. Therefore, it is hard to perform sufficient changing in surface characteristics of ultra fine particles by the conventional plasma treatment techniques.

### SUMMARY OF THE INVENTION

An object of this invention is to provide a method for making ultra fine particles, which can efficiently generate ultra fine particles, the surface characteristics of which have been changed.

Another object of this invention is to provide a device for making ultra fine particles, which can efficiently generate ultra fine particles, the surface characteristics of which have been changed uniformly.

According to one aspect of this invention, there is provided an ultra-fine-particles forming method comprising the steps of: generating plasma of a gas containing reactive gas; forming ultra fine particles by vaporizing and passing raw material through the gas; changing surface characteristics of ultra fine particles by passing them though said plasma of a gas containing reactive gas; and catching the ultra fine particles on a moving carrier and continuously retrieving the ultra fine particles.

Surface characteristics of ultra fine particles can be changed by growing the ultra fine particles and performing plasma treatment to them. Ultra fine particles, the surface characteristics of which have been changed, can be efficiently prepared by catching the ultra fine particles on the moving carrier and by retrieving the ultra fine particles continuously.

In this way, ultra fine particles, the surface characteristics of which have been changed, can be manufactured efficiently. The surface treatment to powder can be performed more efficiently than the plasma treatment of prior art which treats aggregated powder. Changing in surface characteristics can be efficiently performed by performing the surface treatment before ultra fine particles have been aggregated. In addition, generated ultra fine particles can be retrieved continuously under almost uniform conditions.

### BRIEF DESCRIPTION OF THE DRAWINGS

Figs.1A and 1B are a flow chart for explaining a manufacturing method and a schematic cross-sectional view of a manufacturing device according to an embodiment of this invention.
Figs.2A and 2B are schematic cross-sectional views of an ultra-fine-particles manufacturing device according to examples.
Figs.3A and 3B are schematic cross-sectional views of ultra-fine-particles manufacturing devices according to another examples.
Fig.4 is a graph showing a result of an experiment according to first embodiment.
Fig.5 is a graph showing a result of an experiment according to second embodiment.
Fig.6 is a graph showing a result of an experiment according to third embodiment.
Fig.7 is a graph showing a result of an experiment according to comparison example 1.
Fig.8 is a graph showing a result of an experiment according to comparison example 2.
Fig.9 is a graph showing a result of an experiment according to comparison example 3.
Fig.10 is a graph showing a result of an experiment according to fourth embodiment.
Fig.11 is a graph showing a result of an experiment according to fifth embodiment.
Fig.12 is a graph showing a result of an experiment according to comparison example 4.
Fig.13 is a graph showing a result of an experiment according to comparison example 5.
Fig.14 is a graph showing a result of an experiment according to comparison example 6.
Figs.15A and 15B are cross-sectional views of a plasma treatment apparatus for powder treatment and an ultra-fine-particles forming device according to prior art.
Fig.16 is a schematic cross-sectional view of an ultra-fine-particles manufacturing device used in one embodiment of this invention.
Fig.17 is a schematic cross-sectional view of an ultra-fine-particles manufacturing device used in another embodiment of this invention.
Fig.18 is a schematic cross-sectional view of an ultra-fine-particles manufacturing device used in further embodiment of this invention.
Figs. 19A and 19B are schematic views of structures of discharge electrode and gas supplying channels used in the ultra-fine-particles manufacturing device shown in Fig.18.
Fig.20 is a schematic cross-sectional view showing a structure of the ultra-fine-particles manufacturing device according to further embodiment of this invention.
Figs.21 to 24 are graphs showing measured dispersivity of ultra fine particles manufactured according to the embodiment of this invention.
Figs.25A and 25B are a plan view and a bird's-eye view of ultra-fine-particles catching and conveyer systems used in the ultra-fine-particles manufacturing device according to another embodiment of this invention.

### DESCRIPTION OF THE PREFERRED EMBODIMENTS

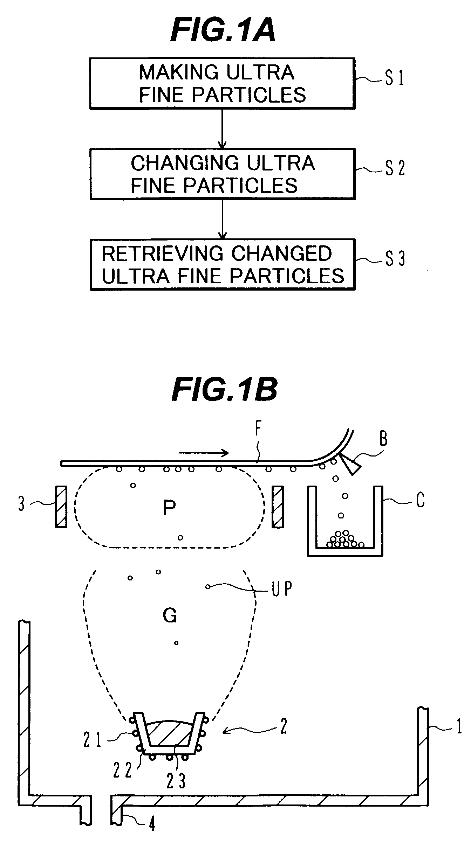

Figs.1A and 1B are a flow chart for explaining a manufacturing method and a schematic cross-sectional view of a manufacturing device according to an embodiment of this invention.

As shown in Fig.1A, ultra fine particles are made at first in step S1. The ultra fine particles can be produced, as known, by vaporizing raw material of ultra fine particles in a gas atmosphere and making vaporized atoms or molecules collide with gas molecules one another to gradually form particles having larger diameters.

In step S2, changing in characteristics of ultra fine particles is performed. Changing in characteristics of ultra fine particles can be performed on the surface after the formation of the ultra fine particles as well as it can be performed during the growth of the ultra fine particles. The changing in characteristics is, for example, treatment that improves dispersivity by forming polar radicals on the surface.

In step S3, the ultra fine particles with changed characteristics are retrieved continuously. The continuous retrieval may be performed by catching the ultra fine particles on a moving carrier, raking the caught particles off, and collecting them in a retrieving vessel. The catching and retrieving process S3 can be performed simultaneously with the step 2.

Fig.1B shows a structural example of a manufacturing device that can perform the method of manufacturing the ultra fine particles with changed characteristics as shown in Fig.1A. A vacuum vessel 1 is equipped with a gas supply port 4 and a gas exhaust port (not shown in the figure) and can maintain a predetermined law pressure atmosphere in its inside. An evaporation source 2 is positioned at the bottom of inside of the vacuum vessel 1.

The evaporation source 2 can be formed, for example, with a structure in which a crucible 22 equipped with a heater 21 contains raw material 23. This structure is called an evaporation source even in a state containing no raw material 23.

A discharge electrode 3 that can excite plasma is disposed above the evaporation source inside of the vacuum vessel 1. The discharge electrode 3 is realized, for example, with a pair of opposed electrodes or a coil. Forming the low-pressure gas atmosphere within the vacuum vessel 1 and exciting the gas by the discharge electrode 3 can generate plasma P.

The plasma P may or may not be generated in a space between the evaporation source 2 and the discharge electrode 3. Gas G exists above the evaporation source 2 to form a circumstance where atoms and molecules vaporized by the evaporation source can collide with gas molecules. The gas G above the evaporation source 2 needs to be such gas that can produce ultra fine particles UP by colliding with the atoms and the molecules vaporized from the evaporation source 2. For example, inert gas forms the gas G. The plasma P needs to include gas that can change characteristics of ultra fine particles. By increasing chemical activity of reactive gas by making the gas into plasma, characteristics of the ultra fine particles UP are changed efficiently. The gas G and the gas that is used to form plasma P, which has different purposes, may be different and supplied from plurality of the gas supply ports 4. Moreover, the ultra-fine-particles generating space and an ultra-fine-particles changing space can be separated physically.

A film carrier F is disposed above the discharge electrode 3. The film carrier F has a structure that enables movement in the direction of an arrow illustrated in the figure. The film carrier F catches the ultra fine particles and combines with means for raking such as a blade B or the like at a position where the film carrier F is moved. The ultra fine particles raked off from the film carrier F by the blade B are dropped and taken into a retrieving vessel C.

Before explaining the preferred embodiments of this invention, a prior work manufacturing method of the ultra fine particles will be explained as a reference example. This example will become an embodiment of this invention, when a substrate which retrieve ultra fine particles is replaced with means for continuously raking and retrieving ultra fine particles, such as the moving film carrier F and the blade B illustrated in Fig.1B.

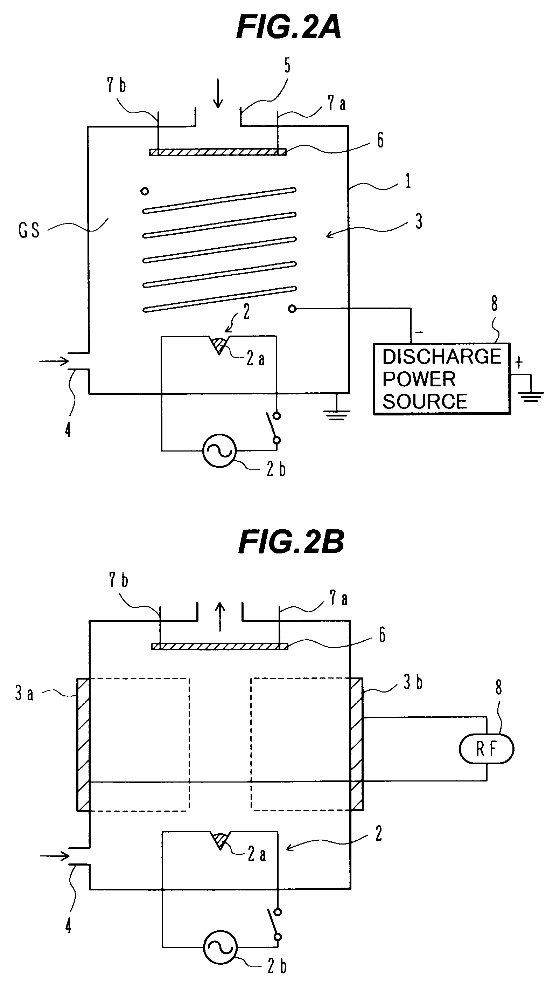

Fig.2A is a schematic cross-sectional view of a structure of an ultra-fine-particles manufacturing device used for manufacturing ultra fine particles in the examples. A vacuum vessel 1 is formed with quartz glass or the like and defines an ultra-fine-particles generating space GS inside. The vacuum vessel 1 has a gas supply port 4 and a gas exhaust port 5. The gas supply port 4 is connected to a gas source and supplies reactive gas. The gas exhaust port 5 is used for maintaining pressure inside of the vacuum vessel at a predetermined reduced pressure within a range from 0.1Torr to several Torr by evacuating gas with a vacuum evacuation device.

Inside of the vacuum vessel 1, an evaporator (a crucible) 2a such as a crucible, discharge electrode 3 for generating plasma and a substrate 6 for retrieving generated ultra fine particles are disposed. The evaporator 2a, for example, is equipped with a resistance-heater and is connected to a power source 2b such as an AC power source so as to evaporate raw material continuously. The vaporized raw material repeats collisions with gas molecules and with one another to gradually form particles having larger diameters.

The discharge electrode 3 is connected to a discharge power source 8 such as a DC power source and generates plasma in gas atmosphere supplied from the gas supply port 4. The plasma excites reactive gas in the gas atmosphere to generate active species such as ion, radical or the like. The active species change characteristics of the ultra fine particles by the reaction upon collisions with the active species. Surfaces of the ultra fine particles become polarized by incorporating polar radicals. The gas supplied into the vacuum vessel can be reactive gas or mixed gas of reactive gas and inert gas.

The substrate 6 is a substrate for retrieving the ultra fine particles that were evaporated from the evaporator 2a and passed through the plasma. It is desirable that the substrate contains coolant supply channel 7a and a coolant exhausting channel 7b and has means for cooling a surface facing to the plasma.

The discharge electrode 3 in this structure, which is connected to the DC power source and is disposed in the ultra-fine-particles generating space GS inside the vacuum vessel 1, generates DC grow discharge. The evaporator 2a is provided with exciting means such as a heater, is connected to the power source 2b and can selectively generates vapor of raw material.

After loading raw material such as pigment or the like into the evaporator 2a of the evaporation source 2, the vacuum vessel 1 is evacuated via gas exhaust port 5 at first. Next, gas containing reactive gas is supplied via the gas supply port 4. The pressure of the gas atmosphere inside the vacuum vessel is kept at a predetermined level by supplying gas containing the reactive gas and controlling evacuation rate of the evacuator. For example, the pressure inside the vacuum vessel is kept at a value in a range from 0.1Torr to several Torr.

By gradually increasing DC voltage being supplied to the discharge electrode 3 from the discharge power source 8, the grow discharge is generated inside the vacuum vessel 1. The voltage supplied from the discharge power source 8 is controlled at a voltage that can generate a desired grow discharge.

Next, by applying electric current to the heater of the crucible 2a from the power source 2b while flowing coolant at a predetermined temperature through coolant passage inside the substrate 6, the crucible 2a evaporates the object raw material. The vapor of the raw material generated from the crucible 2a generates particles which gradually increase their diameters by repeating collision with one another while passing through the plasma generated by the discharge electrode 3. During the process, excited species of the reactive gas in the plasma are incorporated into the particles.

The ultra fine particles having increased diameters move to the gas exhaust port 5 from the gas supply port 4 by riding on gas stream and are caught on the substrate 6. Usual formations of the ultra fine particles are performed by repeating collision with one another and also with the gas molecules supplied from the gas supply port 4 from the time of evaporation by the evaporator 2 until the particles reach the substrate 6.

Further, the reactive gas in the gas is generating chemically very active excited species because the gas is in a plasma state. Characteristics of the surfaces of the particles (the vapor of the raw material) are changed by the collision with the excited species generated from the reactive gas.

The reactive gas in the plasma state, supplied from the gas supply port 4, can introduce ions and modify radicals into the surface of the pigment ultra fine particles generated from the pigment raw material. Thereby, the reactive gas can change the characteristics of the surfaces of the ultra fine particles and keep itself in a gas state in a vacuum. For example, as a reactive gas, one of the followings or a mixed gas of a plurality of gasses selected from the followings can be used; oxide such as O₂, CO₂, NO, NO₂, N₂O, H₂O, H₂O₂ or the like, nitride such as N₂, NH₃, N₂H₄ or the like, H₂S, hydrogen phosphide gas such as PH₃, P₂H₄ or the like, alcohol such as CH₃OH, C₂H₅OH or the like, ether such as CH₃OCH, C₂H₅OC₂H₅ or the like, hydrocarbon such as CH₄, C₂H₆ or the like, and halogenated hydrocarbon such as CH₃Cl, CH₃Br, CH₃I or the like.

As raw material introduced to the evaporator 2a, for example, carbon black or any other higher organic pigment can be used, which has characteristics of superior vividness, coloring ability, transparency, durability or the like. The raw material needs not to loose its characteristics remarkably when it is evaporated by means of heating or the like.

When an organic pigment is used for raw material, following material can be used. As an yellow pigment, anthrapyrimidine yellow, isoindolinone yellow, flavanthrone yellow, acylamide yellow, quinophthalone yellow, condensed azo yellow, nickel azo yellow, copper methyl azo yellow or the like can be used.

As an orange pigment, perynone orange, isoindolinone orange, anthanthrone orange, pyranthrone orange, pyranthrone red or the like can be used.

As a red pigment, quinacridone red, quinacridone magenta, quinacridone scarlet, perylene red, perylene scarlet, perylene maroon, perylene vermilion, perylene Bordeaux, dianthraquinonyl red, thioindigo magenta, thioindigo Bordeaux, condensed azo red or the like can be used.

As a green pigment, phthalocyanine green, polychlorbrom phthalocyanine copper or the like can be used.

As a blue and a purple pigments, nonmetallic phthalocyanine blue, phthalocyanine blue, dioxazine violet, isoviolanthrone violet, isodanthrone blue, or the like can be used.

As a black pigment, cyanine black or the like can be used.

As a fluorescent pigment, lumogen L yellow, lumogen L yellow orange, lumogen L red orange or the like can be used.

As an inorganic pigment, carbon black or the like of which carbon is a main component can be used.

Any device that can evaporate raw material can be used as an evaporator unless the raw material will not be decomposed. For example, a device that evaporates raw material with resistance heating, laser heating, lump heating, or the like can be used.

As a discharging method with the discharge electrode, glow discharge, corona discharge, high frequency discharge and microwave discharge or the like can be used.

In Fig.2A, the electrode 3 that performs grow discharge was illustrated, but the discharge electrode can be changed or modified according to purposes. For example, plate electrode, cylindrical electrode, globular electrode, stick electrode, waveguides, or the like may substitute for the coil electrode shown in Fig.1A. In these electrode-structures, a mesh structure may be adopted. The discharge electrode is not limited to be disposed inside the vacuum vessel, but also may be disposed outside the vacuum vessel.

Metals, stainless steel, carbon, or the like can be used for forming the discharge electrode 3. Necessary conditions when the discharge electrode 3 is disposed inside the vacuum vessel and when it is disposed outside the vacuum vessel are different. Therefore, it is preferable that the material for the discharge electrode 3 is selected according to conditions of use.

When the discharge electrode 3 is disposed inside the vacuum vessel, it is preferable that the discharge electrode 3 has a structure which can occasionally evaporate deposition deposited on the surface of the electrode by flowing current and heating the electrode.

When the material evaporated from the evaporation source is insulating or highly resistive, formation of a deposited film on the surface of the discharge electrode may decrease the rate of generating plasma. Heating the discharge electrode 3 to evaporate the deposited film can avoid that lowering in the rate of generating plasma. However, this condition will disappear when the discharge electrode 3 is disposed outside the vacuum vessel 1.

The substrate 6 maybe anything that can retrieve the produced ultra fine particles. When the substrate 6 is provided with the cooling function, efficient retrieval of the ultra fine particles will be possible. As a coolant for cooling the substrate 6, the well-known coolant such as water, air or the like can be used.

It is preferable that the discharge power source 8 supplies high power to the discharge electrode 3 for generating plasma. However, the preferable power differs according to the kind of gas used and its pressure and also to the kind of pigment and its evaporation speed. Moreover, it is necessary to limit the discharge level to that the raw material such as pigments or the like will not be decomposed. For example, in case of DC discharge, the discharge power source 8 supplies electric power of several tens watts to the discharge electrode 3.

In practical manufacture of the ultra fine particles, the power source 2b supplies electric power to the evaporator 2a to evaporate the raw material such as pigment or the like after the discharge is stabilized. The evaporated pigment molecules grow into ultra fine particles by repeating collisions with gas molecules, and condensing while being cooled. At this time, active radicals of the reactive gas produced by the discharge act on the surfaces of the ultra fine particles and chemically change characteristics of the ultra fine particles.

The substrate 6 retrieves the ultra fine particles changed in this way. By cooling the substrate 6, retrieving rate of the ultra fine particles and suppression of heating damage to the ultra fine particles from radiation of the evaporation source are improved.

Fig.2B shows a structure of another ultra-fine-particles manufacturing device schematically. Similar reference numbers as in Fig.2A indicate similar parts. Mainly, parts different from Fig.2A will be described in the following.

Discharge electrode 3a and 3b are disposed outside a vacuum vessel 1 and are connected to a radio-frequency power source 8 to form opposed electrode. Impressing radio-frequency voltage between the opposed electrodes 3a and 3b generates a capacitively coupled radio-frequency electric field in an ultra-fine-particles generating space GS. By this radio-frequency electric field, supplied gas containing reactive gas becomes plasma.

A manufacturing method of ultra fine particles with the device shown in Fig.2A will be described below.

### FIRST EMBODIMENT:

Manufacture of ultra fine particles with changed characteristics was performed with the device shown in Fig.2A, using phthalocyanine blue as pigment, H₂O for work gas and DC grow discharge for a power supply method. The phthalocyanine blue used as raw material was phthalocyanine copper P1006 available from Tokyo Chemical Industry Co., Ltd. Japan. The pressure of H₂O gas was 0.5Torr. Input electric power was about 5W.

After moving the retrieved ultra fine particles into a test tube, the particles were dispersed in pure water in proportion to 0.2 weight % of water. After leaving this dispersed solution for a while, 30µl of supernatant of the solvent in the test tube was scooped and diluted with 2ml of aqueous solution of 0.1% polyoxyethylene(10)octylphenyl ether (tritonX-100). The absorption of the absorption peak of the phthalocyanine blue at the wavelength near 610nm was measured. A dispersivity index was established by taking ratios of the absorption at 13 hours rest and 26 hours rest to the absorption at no rest.

When low dispersivity causes cohesion and precipitation of the particles, the absorption of the supernatant becomes low. Therefore, the value of the ratio will become near zero. When the particles are stably dispersed without precipitation, the absorption keeps a value near the initial value that means the ratio is close to one.

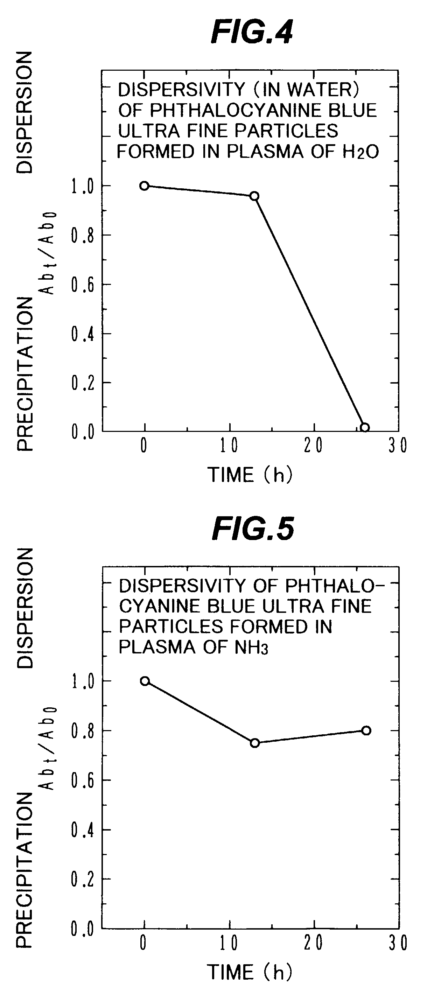

Fig.4 shows a result of the measurement. It shows that the particles had been stably dispersed for 13 hours. The solution showed relatively clear and transparent appearance. Thereby, it can be seen that the ultra fine particles with changed surfaces were produced.

### SECOND EMBODIMENT:

The supplied gas was changed to NH₃ in this example. Other conditions were kept the same as in first embodiment.

Fig.5 shows the result of measurement. Although a little precipitation was found, a dispersed solution with clarity was observed. Therefrom, it is seen that ultra fine particles which have remarkably changed surface characteristics were produced.

### THIRD EMBODIMENT:

The work gas was changed to O₂ in this reference example. Other conditions were kept the same as in first embodiment.

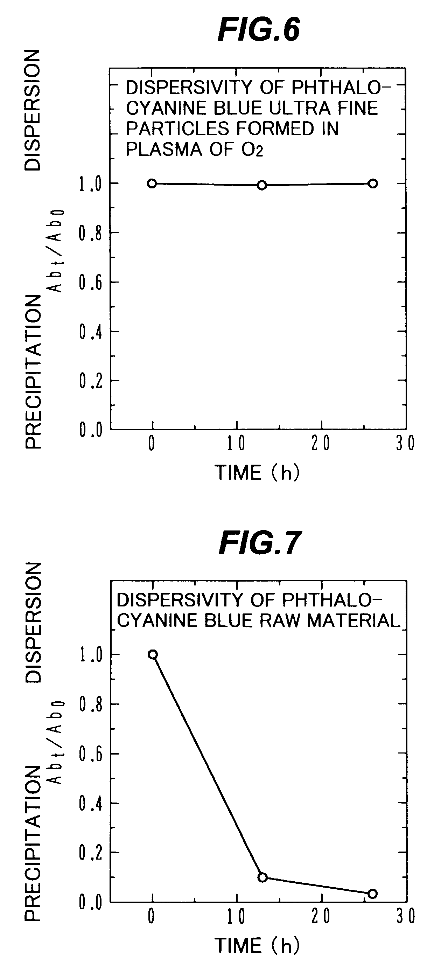

Fig.6 shows the result of measurement. No precipitation was found, and a dispersed solution with clarity and high dispersion was observed. Therefrom, it is seen that ultra fine particles with remarkably changed surface characteristics were produced.

### COMPARISON EXAMPLE 1:

Any plasma treatment was not given to raw material in this example. This raw material was dispersed in water. Other conditions were kept the same as in first embodiment.

Fig.7 shows the result of measurement. Muddiness had been found since the initial stage, and precipitation was formed predominantly Therefrom, it is seen that the stable dispersion is impossible in this example.

### COMPARISON EXAMPLE 2:

The work gas was changed to He, and no discharge was done in this example. Other conditions were kept the same as in first embodiment.

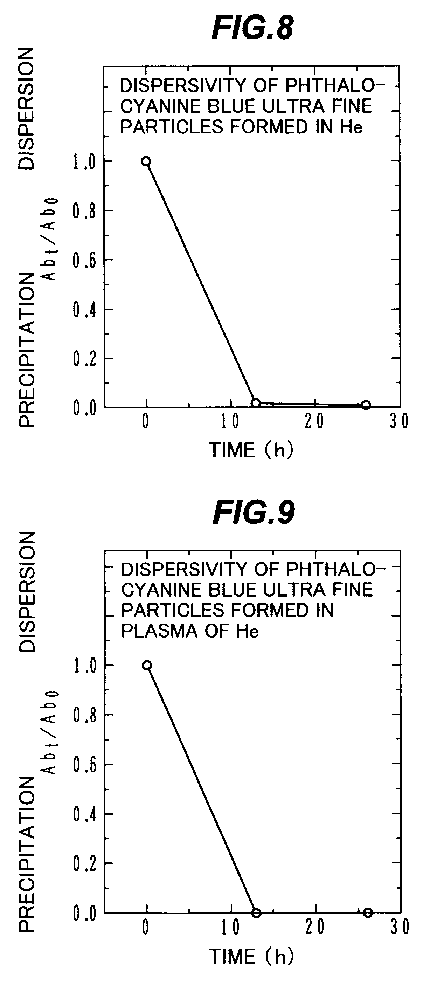

Fig.8 shows the result of measurement. Muddiness had been found since the initial stage, and precipitation was formed predominantly. Therefrom, it is seen that the stable dispersion is impossible in this example.

### COMPARISON EXAMPLE 3:

The work gas was changed to He in this example. Other conditions are kept the same as in first embodiment.

Fig.9 shows the result of measurement. Muddiness had been found since the initial stage, and precipitation was formed predominantly. Therefrom, it is seen that the stable dispersion is impossible in this example.

### FOURTH EMBODIMENT:

In this example, quinacridone magenta was used as pigment. The work gas was changed to O₂, and the wavelength detecting the absorption was set at the absorption peak, near 580nm. Other conditions are kept the same as in first embodiment. The quinacridone magenta is 2,9-dimethylquinacridone RTS available from Dainippon Ink and Chemicals, Inc. Japan.

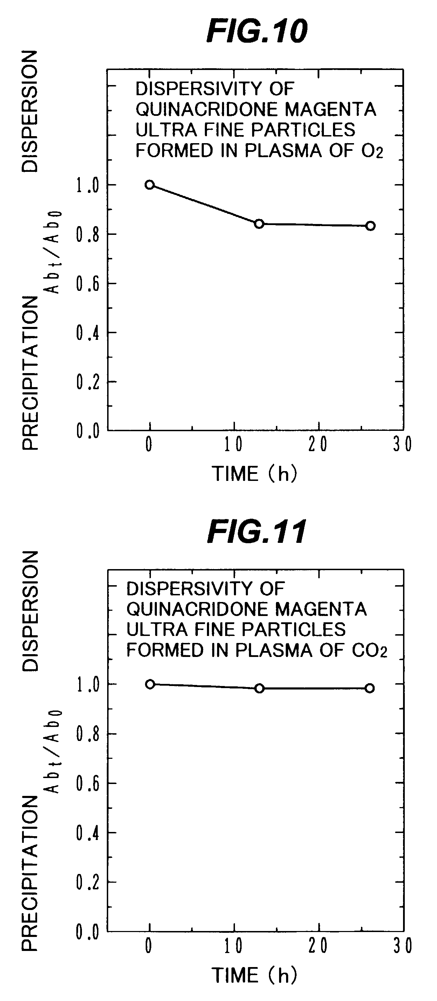

Fig.10 shows the result of measurement. Although a little precipitation was found, a dispersed solution with clarity was observed. Therefrom, it is seen that ultra fine particles with remarkably changed surface characteristics were produced.

### FIFTH EMBODIMENT:

The work gas was changed to CO₂ in this example. Other conditions are kept the same as in fourth embodiment.

Fig.11 shows the result of measurement. No precipitation was found, and a dispersed solution with clarity and high dispersion was observed. Therefrom, it is seen that ultra fine particles with remarkably changed surface characteristics were produced.

### COMPARISON EXAMPLE 4:

Any plasma treatment was not given to raw material in this example. This raw material was dispersed in water. Other conditions are kept the same as in fourth embodiment.

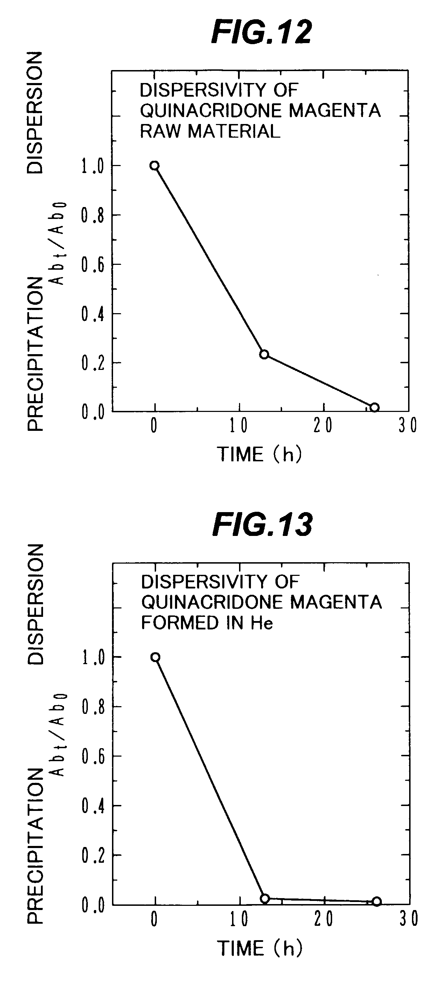

Fig.12 shows the result of measurement. Muddiness had been found since the initial stage, and precipitation was formed predominantly. Therefrom, it is seen that the stable dispersion is impossible in this example.

### COMPARISON EXAMPLE 5:

The work gas was changed to He, and no discharge was done in this example. Other conditions are kept the same as in fourth embodiment.

Fig.13 shows the result of measurement. Muddiness had been found since the initial stage, and precipitation was formed predominantly. Therefrom, it is seen that the stable dispersion is impossible in this example.

### COMPARISON EXAMPLE 6:

The work gas was changed to He in this example. Other conditions are kept the same as in fourth embodiment.

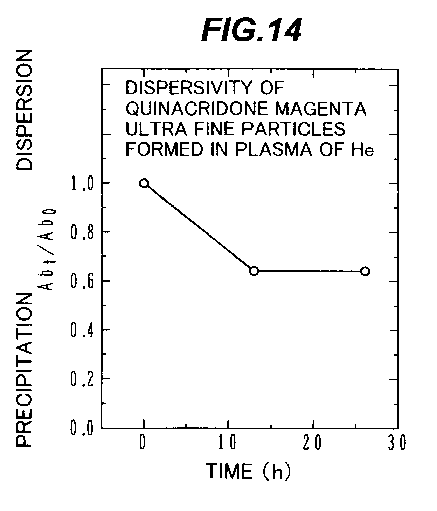

Fig.14 shows the result of measurement. The example as a whole cohered in gel state and was muddy while heavy precipitation was not formed. Therefrom, it is found that the stable dispersion is completely impossible in this example.

In the above-mentioned examples, the raw material such as pigment or the like was evaporated in the reactive gas atmosphere and the ultra fine particles were generated thereby in the reactive gas atmosphere. The reactive gas is for changing in the surfaces of the ultra fine particles generated. It is apparent to those skilled in the art that inert gas such as He or the like can be added, which does not contribute to the change in surfaces of ultra fine particles.

Further, insides of ultra fine particles being generated are not necessary to be changed because an object of change is satisfied if the surfaces of the particles are changed. A following example will explain how to change characteristics of only surfaces of ultra fine particles.

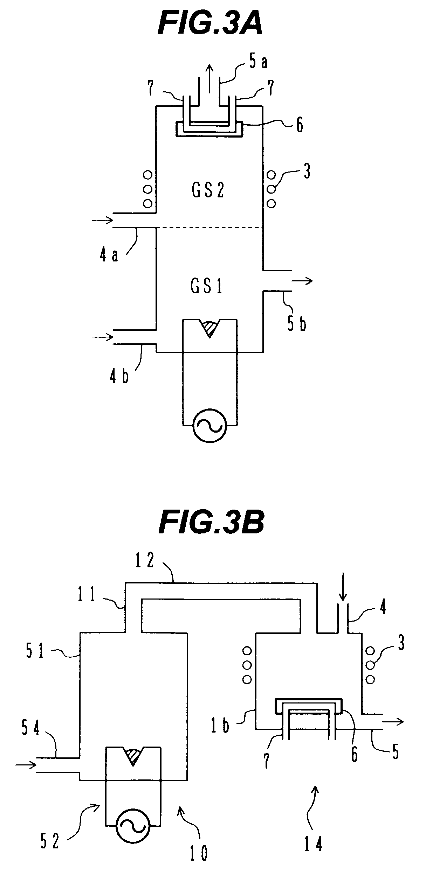

Fig.3A shows an example that limits a plasma generation space. Compared to the example in Fig.2A, the ultra-fine-particles generating space GS is separated into two parts, GS1 and GS2. A metal mesh or the like may be used for separating two spaces. The space GS1 where the plasma treatment is not performed generates the ultra fine particles by a method similar to prior art shown in Fig.15B. The space GS2 where the plasma treatment is performed grows the ultra fine particles and changes them in characteristics.

Radio-frequency coil 3 is disposed to surround an upper space of a vacuum vessel 1 corresponding to the space GS2 where plasma is generated. Vapor raw material evaporated from an evaporation source 2 grows to a predetermined diameter in the space GS1 where plasma does not exist, and then the vapor is supplied into the space GS2. In the plasma space GS2, the diameters of the ultra fine particles are grown, and the surfaces of them are changed in characteristics. In the above manner, the ultra fine particles that are retrieved by the substrate 6 have changed surfaces in characteristics, but not insides.

Further, a plurality of gas supply ports may be placed as shown in the figure. An inert gas supply port 4b is placed corresponding to the space GS1 where plasma does not exist, and a reactive gas supply port 4a is placed corresponding to the plasma space GS2. In addition to the above configuration. a plurality of gas exhaust ports may be placed as shown in the figure.

Fig.3B shows a structure of a further ultra-fine-particles manufacturing device schematically. A structure of an ultra-fine-particles forming part 10 is equivalent to that of the ultra-fine-particles forming device according to prior art. Crude vapor particles evaporated from an evaporation source 52 grow into ultra fine particles by repeating collision in a gas atmosphere supplied from a gas supply port 54. The grown ultra fine particles are conveyed or transported to a plasma treatment chamber 14 with work gas via a conveyer channel 12 from a transportation port 11. Further, a buffer chamber may be placed to interrupt the conveyer channel 12.

In the plasma treatment chamber 14, a reactive gas supplied via a gas supply port 4 forms a gas atmosphere containing reactive gas. The plasma treatment chamber 14 is connected to a vacuum evacuation system via a gas exhaust port 5. While an inside of the plasma treatment chamber 14 is kept at a fixed pressure, plasma is generated inside of the plasma treatment chamber 14 by a plasma exciting system 3. This plasma changes the surface characteristics of the supplied ultra fine particles. A substrate 6 retrieves the ultra fine particles, the surface characteristics of which have been changed.

In the above-explained example, the substrate 6 retrieves the ultra fine particles generated, of which the surface characteristics were changed. Although retrieving capacity can be improved by cooling the substrate 6, there is a limit to the retrieving capacity.

When massive production of the ultra fine particles is necessary, it is desired to produce them in continuous process. Therefor, it is hoped that the ultra fine particles, as shown in Fig.1B, are caught and conveyed by the film carrier F, which is a moving carrier, and are dropped to be taken into the retrieving vessel C by means of raking such as the blade B or the like.

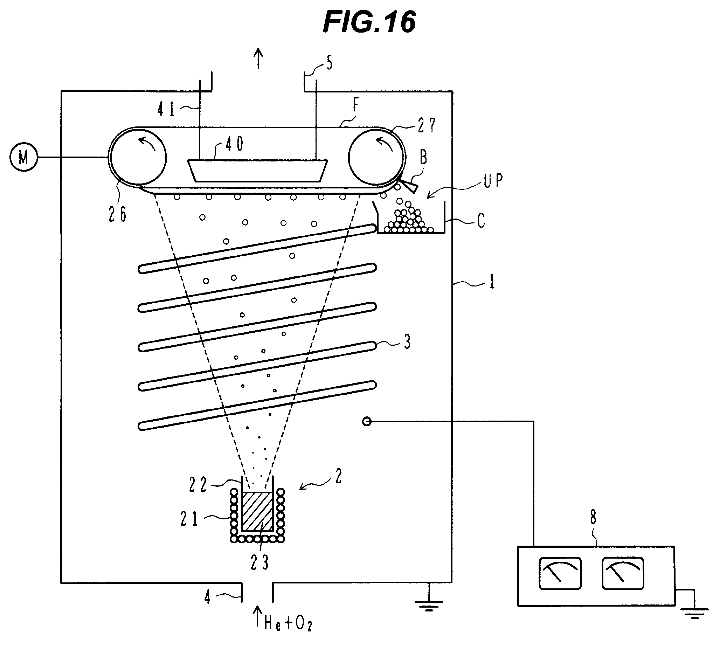

Fig.16 is a cross-sectional view showing an ultra-fine-particles manufacturing device according to one embodiment of this invention. An evaporation source 2 and a discharge electrode 3 are disposed inside a vacuum vessel 1, and the discharge electrode 3 is connected to a discharge power source 8. The above-mentioned configuration is similar to the example shown in Fig.2A.

In this embodiment, a seamless endless film F that is tied around rollers 26 and 27 is placed instead of the substrate 6. A cooler 40 is contiguously placed on the rear surface of the endless film F at the lower side. The cooler 40 is connected to a coolant channel 41 and thereby it is possible to cool the cooler 40 continuously to a desired temperature.

A drive motor M is connected to either one of the rollers 26 or 27 (the roller 26 is connected in the figure). The endless film F is driven by the roller 26 when the motor M rotates the roller 26 in a direction of an arrow, and it makes the roller 27 rotate in the direction of the arrow, too.

A blade B is placed on the roller 27 and in contact slightly with the surface of the endless film F. While the endless film F passes the blade B while moving to the direction of the arrow, deposition deposited on the endless film F is raked off and drops into a retrieving vessel C.

The endless film F is desired to have a totally smooth surface and a uniform thickness. For example, the endless film F is formed with a seamless film.

Raw material for the endless film F is not limited to particular material, though it is preferable to be heat-resistant. For example, it is formed with polyethylene terephthalate (PET). Other material such as high polymer resin, metals, or the like can be used for forming the endless film F. Raw material for the blade B is not limited to particular material unless it can contact uniformly with the film F without damaging the film F.

Similar to the example shown in Fig.2A, plasma is generated by supplying AC electricity to the discharge electrode 3 from the discharge power source 8 after supplying gas containing reactive gas from a gas supply port 4. Then, after evaporating raw material 23 by the evaporation source 2, molecules or atoms in the vapor repeat collision with gas molecules and with one another to form ultra fine particles, Characteristics of these ultra fine particles are changed in plasma, and then the ultra fine particles are caught on the endless film F while continuing to grow.

The catching efficiency will be improved by cooling the endless film F by the cooler 40. The ultra fine particles that had been caught on the endless film F are conveyed in transverse direction by the rotation of the rollers 26 and 27. Then the blade B rakes and drops the ultra fine particles, and the retrieving vessel C retrieves the particles. The endless film F of which the ultra fine particles were retrieved is driven by the rollers 26 and 27 again to be conveyed to an ultra-fine-particles catching region. By continuing formation of the ultra fine particles while conveying the endless film F, the ultra fine particles can be continuously retrieved. According to the above-mentioned method, continuous production of the ultra fine particles become possible until the raw material 23 runs out.

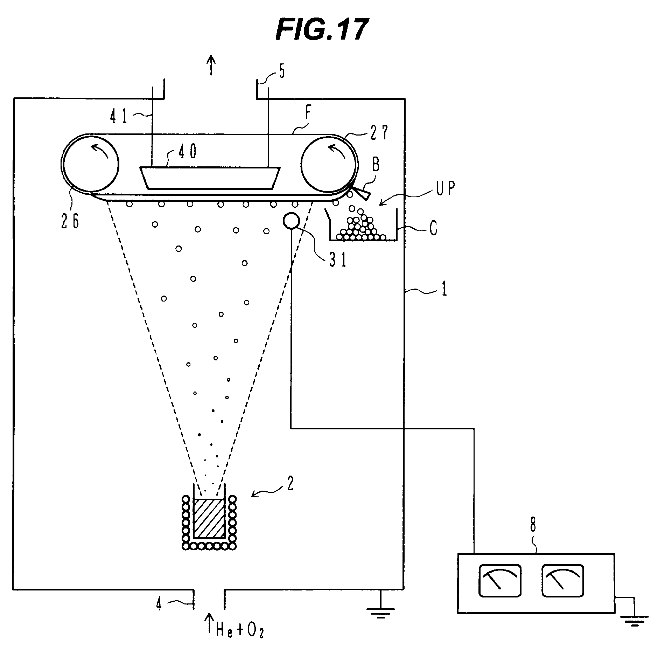

Fig.17 is a cross-sectional view showing an ultra-fine-particles manufacturing device according to another embodiment of this invention. In this embodiment, a discharge electrode is formed of a stick-shaped electrode 31 that is placed to extend below an endless film F. A vacuum vessel 1 is grounded to form an electric circuit with the electrode 31. Other structures are the same as in the manufacturing device shown in Fig.16.

In this embodiment, plasma generation is concentrated in the vicinity of the endless film F because the discharge electrode 31 is disposed near the bottom surface of the endless film F, across the width of the endless film F. Raw material evaporated from an evaporation source 2 is caught by the endless film F after growing into ultra fine particles. The ultra fine particles caught by the endless film F pass the vicinity of the discharge electrode 31 by being conveyed by rollers 26 and 27. Because the plasma is concentrated in the vicinity of the discharge electrode 31, characteristics of the ultra fine particles on the surface of the endless film F are changed efficiently. Other points are similar to the embodiment shown in Fig.16.

When filling the vacuum vessel with reactive gas may cause accelerated cracking (thermal decomposition) of raw material at the evaporation source or changing in characteristics of raw material that prevents vaporization, it is preferable that the reactive gas is distributed only to a part of the vacuum vessel to avoid supplying the reactive gas to the vicinity of the evaporation source.

In the above-mentioned case, it is desired that the work gas such as inert gas for forming the ultra fine particles and the reactive gas for changing in characteristics are supplied from different gas supply ports.

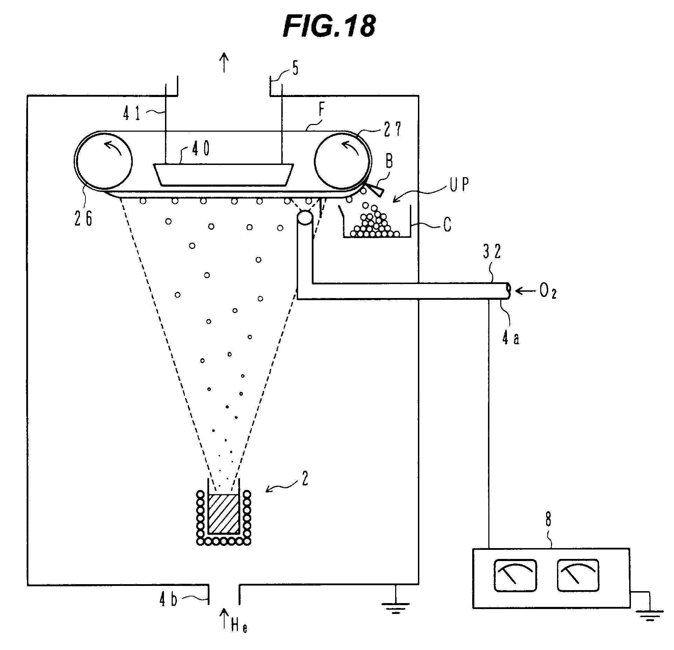

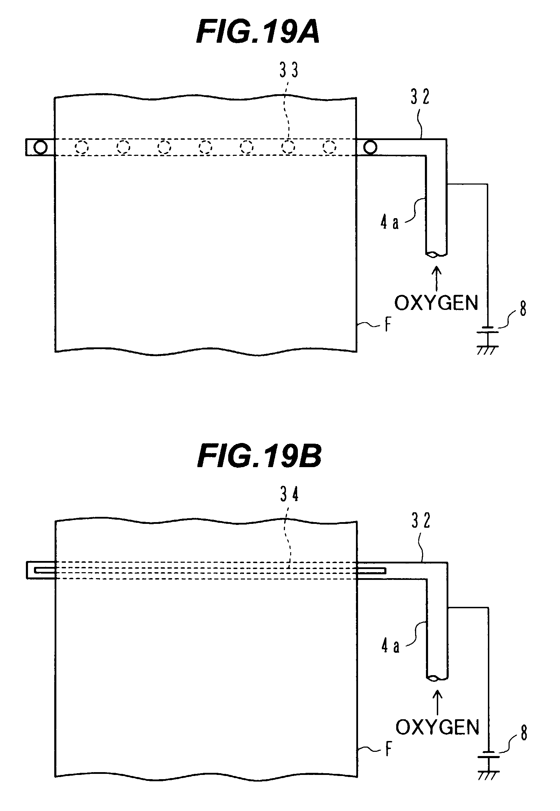

Fig.18 is a cross-sectional view showing an ultra-fine-particles manufacturing device according to a further embodiment of this invention. In this embodiment, a discharge electrode 32 is formed with an electro-conductive hollow member such as a metal pipe or the like, into which reactive gas such as oxygen or the like can flow. The discharge electrode 32 as same as the embodiment shown in Fig 17 is placed under an endless film F in parallel to the endless film F across the width of the endless film F. Along the elongated part of the discharge electrode 32, a plurality of openings 33 shown in Fig.19A or a continuous slit shown in Fig.19B are or is formed. The width of the slit is, for example, 0.2mm, 0.4mm, 0.6mm) or the like.

The reactive gas supplied from the reactive gas supply port 4a is ejected to the endless film F from the openings 33 shown in Fig.19A or from the slit 34 shown in Fig.19B. By making this reactive gas into plasma, oxygen plasma is generated concentratively near the space between the discharge electrode 32 and the endless film F. Further, a gas supply port 4b under the vacuum vessel supplies only inert gas, He for example.

Raw material evaporated from the evaporation source 2 turn into ultra fine particles in the inert gas atmosphere, and pass through the oxygen plasma by being caught and conveyed by the endless film F. The ultra fine particles of which characteristics were changed in the oxygen plasma are retrieved by the retrieving vessel C after being raked off by the blade B. Other points are similar to the above-mentioned embodiments.

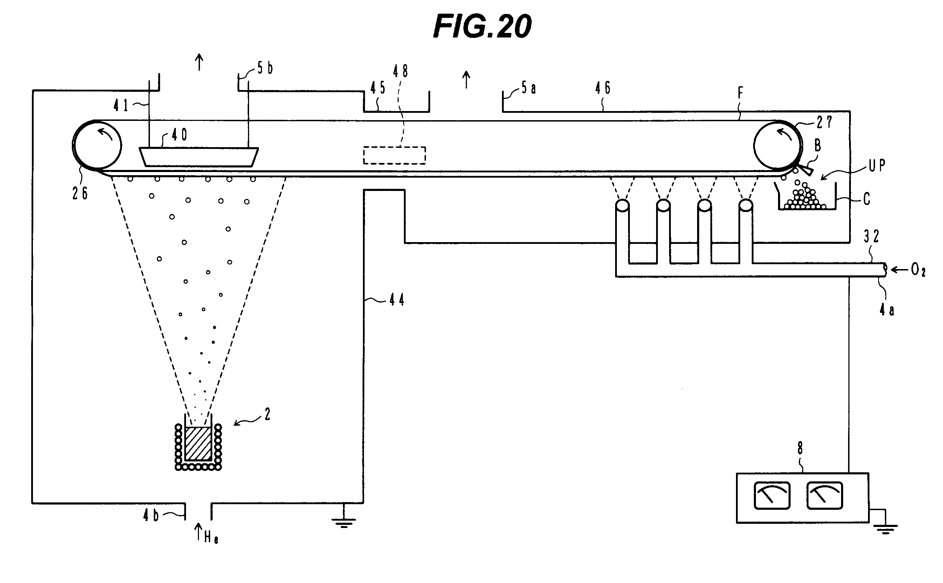

Fig.20 is a cross-sectional view showing an ultra-fine-particles manufacturing device according to another embodiment of this invention. In this embodiment, a vacuum vessel has an ultra-fine-particles generating chamber 44, a surface-characteristics changing chamber 46 and connector 45 that connects two chambers. The ultra-fine-particles generating chamber 44 is equipped with a gas supply port 4b and a gas exhaust port 5b. An evaporation source 2 is disposed inside the ultra-fine-particles generating chamber 44 and evaporates raw material to produce ultra fine particles while inert gas is being supplied from the gas supply port 4b.

Plasma can be generated in the surface-characteristics changing chamber 46 by inserting a discharge electrode 32 that is connected with a gas supply port 4a. The discharge electrode 32 is formed with a hollow pipe, and its head is diverged. Further, the surface-characteristics changing chamber 46 is equipped with a gas exhaust port 5a. A roller 26 is placed inside the ultra-fine-particles generating chamber 44, and a roller 27 is placed inside the surface-characteristics changing chamber 46. An endless film F is tied around these rollers 26 and 27 to connect them through the connector 45.

The evaporation source 2 in the ultra-fine-particles generating chamber 44 evaporates raw material to produce ultra fine particles that will be caught on the endless film F. The ultra fine particles that have been caught on the endless film F are conveyed accompanying with the movement of the endless film F to the direction to right in the figure. The surfaces of the ultra fine particles are changed in characteristics by being exposed in oxygen plasma in the surface-characteristics changing chamber 46. The ultra fine particles of which characteristics were changed in the oxygen plasma are retrieved by a retrieving vessel C after being raked off by a blade B.

Further, in this embodiment, the separation of the ultra-fine-particles generating chamber 44 and the surface-characteristics changing chamber 46 is performed further completely because they are connected via the connector 45. This separation makes it possible to control gas atmosphere of both spaces individually. Therefore, the temperature of a cooler 40 can be set at the level below the liquefying temperature of the reactive gas. When necessary, a heater 48 can be placed in or near the connector 45 for heating the cooled endless film F up to a suitable temperature for changing characteristics.

### SIXTH EMBODIMENT

Ultra fine particles were manufactured by using the device shown in Fig.18. Phthalocyanine blue was used as raw material. Helium (flown at 200sccm) was used as work gas for producing ultra fine particles, and O₂ (flown at 100sccm) was used as reactive gas for changing in surface characteristics. The pressure near the evaporation source was set at 0.5Torr, and 13.56MHz radio-frequency electric power was set at about 40W. Thereafter, the dispersivity of these ultra fine particles was measured.

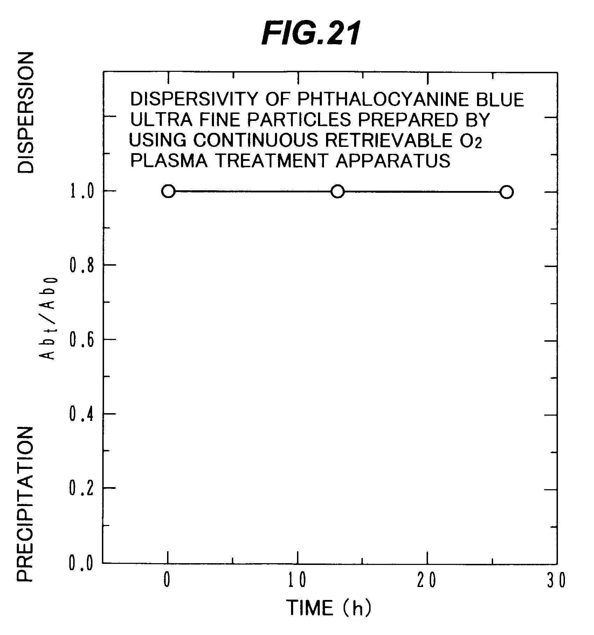

Fig.21 is the result of the measurement showing the dispersivity of phthalocyanine-blue ultra fine particles in water, which were manufactured by the continuous retrieving method. Abscissa and ordinate are similar to them in the examples. The absorption ratios after 13 hours and after 26 hours are kept at 1.0. Therefrom, it is seen that high dispersion was obtained.

### SEVENTH EMBODIMENT

Quinacridone magenta was used as raw material. Wavelength for detecting the absorption was set at the absorption peak, near 580nm. Other conditions are kept the same as in the above-mentioned embodiment.

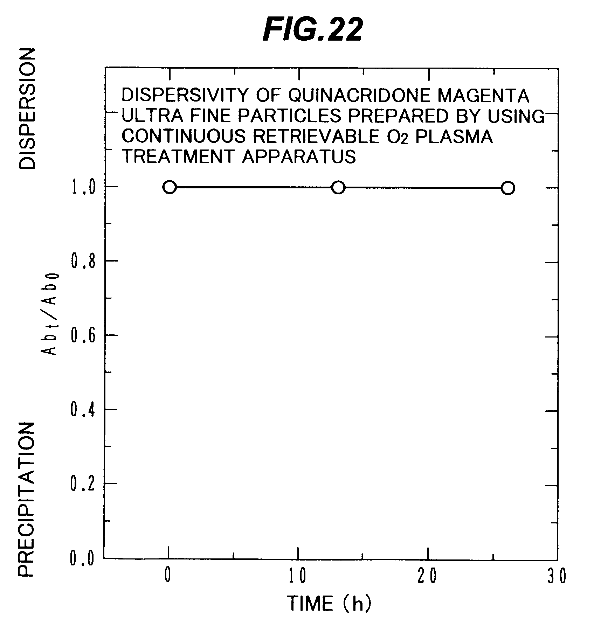

Fig.22 shows the result of the measurement. In this case, no precipitation was found, and a dispersed solution with clarity and high dispersion was observed. Therefrom, it is seen that ultra fine particles with remarkably changed surface characteristics were produced.

### EIGHTH EMBODIMENT

Perylene maroon was used as raw material. Wavelength for detecting the absorption was set at the absorption peak, near 470nm. Other conditions are kept the same as in the above-mentioned embodiments.

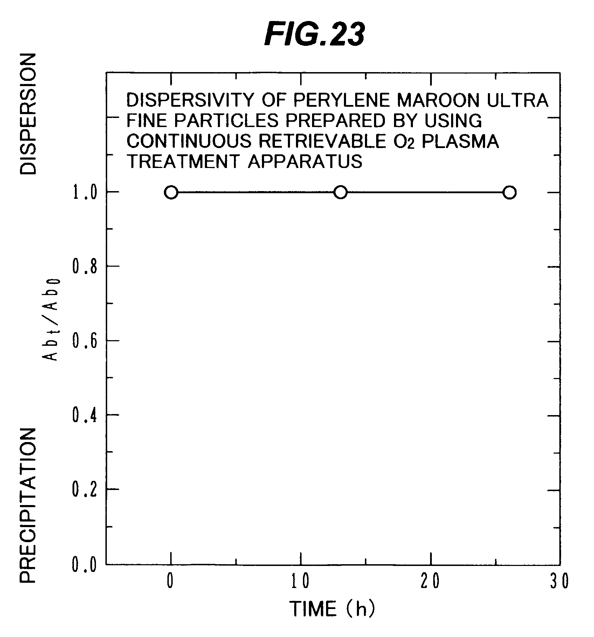

Fig.23 shows the result of the measurement. In this case, no precipitation was found, and a dispersed solution with clarity was obtained. High dispersion was obtained after leaving the dispersed solution. Therefrom, it is seen that ultra fine particles with remarkably changed surface characteristics were produced.

### NINTH EMBODIMENT

Industrial grade Paraffin was used as raw material. Ethyl acetate was used as a solvent in the dispersivity measurement. In this case, because of no absorption in the visible region of the wavelength, detecting wavelength was set at 550nm, and the measurement was performed, regarding the loss of penetrated light due to light scattering as absorption. Other conditions were kept the same as in the above-mentioned embodiments.

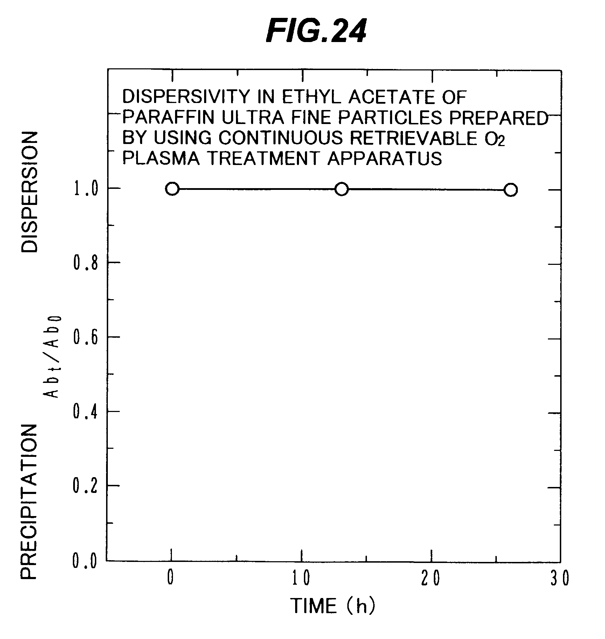

Fig.24 is a graph showing the result of the measurement. The dispersed solution was clouded but no precipitation was found. High dispersion had been obtained, and it did not diminish even after the passage of time. Therefrom, it is seen that ultra fine particles with remarkably changed surface characteristics were produced.

The present invention has been described in connection with the preferred embodiments. The invention is not limited only to the above-mentioned embodiments. For example, a carrier for catching and conveying ultra fine particles is not limited to the endless film. A reciprocatetive long film or the like may be used as a carrier. Further, any carriers other than a film can be used.

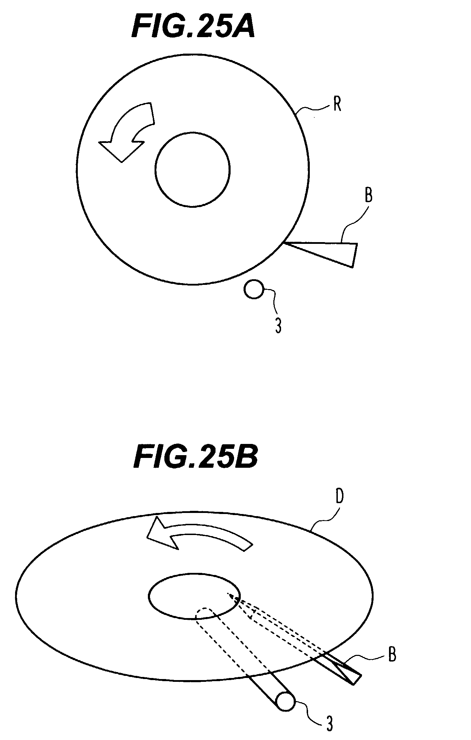

Figs.25A and 25B show examples for catching and conveying ultra fine particles by using a revolving solid body as a carrier instead of a transformable film.

In fig.25A, a cylindrical revolving body R revolves around the axis. A raking blade B is placed at right side in the figure to contact with the periphery of the cylinder. A discharge electrode 3 is disposed to the left of the blade B under the revolving body R. Grown ultra fine particles advance upward. While revolving the revolving body R in the direction of the arrow and generating plasma, the ultra fine particles of which characteristics were changed are caught on the periphery of the revolving body R and are conveyed to be raked off by the blade B.

In fig.25B, a rotating disk D is used as a carrier. While rotating the rotating disk D in the direction of the arrow, plasma is generated in the vicinity of a discharge electrode 3. Ultra fine particles that were caught on the lower side surface of the rotating disk D are conveyed to the direction of circumference. Thereafter, they are raked off by a blade B that is touching with the lower side surface. Work gas producing ultra fine particles is not limited to inert gas. It may be possible to use reactive gas by using its reactivity positively.

Further, in the above-mentioned embodiments, pigment is used as raw material to which plasma treatment is performed. Other material can be used as raw material for ultra fine particles unless it can be evaporated in vacuum. It is preferable to use raw material of which surface characteristics can be changed by the plasma treatment, though any material can be used. For example, following material can be used: (a) higher alkane, alkene, alkyne, their nitros, halides, or the like; (b) aromatic compounds; (c) higher alcohol, phenol, ether; (d) higher carbonyl compounds; (e) higher carboxylic acid, its acid anhydrides, its derivatives such as ester, imide, nitrile, or the like; (f) sulfur compounds; and (g) nitro compounds, or the like.

Further, this invention may be used for manufacturing luminescent material such as an electro luminescence (EL) or the like, for functional material or organic semiconductors that can be used as a sensor or the like, for medical material or the like. Moreover, it may be used for manufacturing inorganic material such as metals, alloys, semiconductors, compound semiconductors, metal-oxides, ceramics, or the like. As an evaporating method, sputtering, induction heating, laser ablation, light beam heating or the like can be used.

It will be apparent to those skilled in the art that various modifications, improvements, combinations, and the like can be made.

According to its broadest aspect the invention relates to a method of manufacturing ultra fine particles, comprising the steps of: generating plasma of a gas containing reactive gas; and forming ultra fine particles by evaporating and passing raw material through the gas.

It should be noted that the objects and advantages of the invention may be attained by means of any compatible combination(s) particularly pointed out in the items of the following summary of the invention and the appended claims.

### SUMMARY OF THE INVENTION

1. A method of manufacturing ultra fine particles, comprising the steps of:
   generating plasma of a gas containing reactive gas;
   forming ultra fine particles by evaporating and passing raw material through the gas; and
   changing surface characteristics of ultra fine particles by passing them through said plasma of a gas containing reactive gas.
2. A method of manufacturing ultra fine particles further comprising the steps of catching the ultra fine particles on a moving carrier and continuously retrieving the ultra fine particles.
3. A method of manufacturing ultra fine particles
   wherein said step of changing surface characteristics of the ultra fine particles comprises the step of passing grown ultra fine particles through said plasma of a gas containing reactive gas while being floated therein.
4. A method of manufacturing ultra fine particles
   wherein said step of forming ultra fine particles comprises growing ultra fine particles to a predetermined average diameter in gas, and said step of changing surface characteristics of the ultra fine particles comprises passing said ultra fine particles grown to a predetermined average diameter through said plasma of a gas containing reactive gas while being floated therein.
5. A method of manufacturing ultra fine particles
   wherein said step of changing surface characteristics of the ultra fine particles comprises catching the ultra fine particles grown to a predetermined average diameter on a moving carrier and passing them through said plasma of a gas containing reactive gas.
6. A method of manufacturing ultra fine particles
   wherein said plasma of a gas containing reactive gas has a pressure under several Torr.
7. A method of manufacturing ultra fine particles
   wherein said raw material is pigment.
8. A method of manufacturing ultra fine particles
   wherein said reactive gas comprises at least one of O₂, CO₂, NH₃, and H₂O.
9. A method of manufacturing ultra fine particles
   wherein said step of continuously retrieving comprises conveying the ultra fine particles having changed characteristics by depositing them onto a film carrier.
10. A method of manufacturing ultra fine particles
   wherein said step of continuously retrieving comprises conveying the ultra fine particles having changed characteristics by depositing them onto a rotating carrier.
11. A method of manufacturing ultra fine particles
   wherein said step of continuously retrieving comprises raking off the ultra fine particles of which the characteristics were changed by depositing them on the carrier.
12. A device for manufacturing ultra fine particles comprising:
   a vacuum vessel having a gas supply port;
   an evaporation source disposed in said vacuum vessel:
   means for exciting that can generate plasma in said vacuum vessel;
   a movable film carrier placed in said vacuum vessel; and
   means for raking off, which can rake ultra fine particles off from said film carrier.
13. A device for manufacturing ultra fine particles
   wherein said means for raking off is a blade contacting with said film carrier.
14. A device for manufacturing ultra fine particles
   wherein said film carrier comprises an endless film and a roller that drives the endless film.

## Claims

1. A method of manufacturing ultra fine particles, comprising the steps of:
generating plasma of a gas containing reactive gas;
forming ultra fine particles by evaporating and passing raw material through the gas; and
changing surface characteristics of ultra fine particles by passing them through said plasma of a gas containing reactive gas.

2. A method of manufacturing ultra fine particles according to claim 1, further comprising the steps of catching the ultra fine particles on a moving carrier and continuously retrieving the ultra fine particles.

3. A method of manufacturing ultra fine particles according to any one of claim 1 and claim 2, wherein said step of changing surface characteristics of the ultra fine particles comprises the step of passing grown ultra fine particles through said plasma of a gas containing reactive gas while being floated therein.

4. A method of manufacturing ultra fine particles according to any one of claim 1 and claim 2, wherein said step of forming ultra fine particles comprises growing ultra fine particles to a predetermined average diameter in gas, and said step of changing surface characteristics of the ultra fine particles comprises passing said ultra fine particles grown to a predetermined average diameter though said plasma of a gas containing reactive gas while being floated therein.

5. A method of manufacturing ultra fine particles according to any one of claim 1 and claim 2, wherein said step of changing surface characteristics of the ultra fine particles comprises catching the ultra fine particles grown to a predetermined average diameter on a moving carrier and passing them through said plasma of a gas containing reactive gas.

6. A method of manufacturing ultra fine particles according to any one of claim 1 and claim 2, wherein said plasma of a gas containing reactive gas has a pressure under several Torr.

7. A method of manufacturing ultra fine particles according to any of the preceding claims wherein said raw material is pigment,
and/or wherein preferably said reactive gas comprises at least one of O₂, CO₂, NH₃, and H₂O,
and/or wherein preferably said step of continuously retrieving comprises conveying the ultra fine particles having changed characteristics by depositing them onto a film carrier,
and/or wherein preferably said step of continuously retrieving comprises conveying the ultra fine particles having changed characteristics by depositing them onto a rotating carrier,
and/or wherein preferably said step of continuously retrieving comprises raking off the ultra fine particles of which the characteristics were changed by depositing them on the carrier.

8. A device for manufacturing ultra fine particles comprising:
a vacuum vessel having a gas supply port;
an evaporation source disposed in said vacuum vessel;
means for exciting that can generate plasma in said vacuum vessel;
a movable film carrier placed in said vacuum vessel; and
means for raking off, which can rake ultra fine particles off from said film carrier.

9. A device for manufacturing ultra fine particles according to any of the preceding claims wherein said means for raking off is a blade contacting with said film carrier,
and/or wherein preferably said film carrier comprises an endless film and a roller that drives the endless film.

10. A method of manufacturing ultra fine particles, comprising the steps of:
generating plasma of a gas containing reactive gas;
and forming ultra fine particles by evaporating and passing raw material through the gas.
